(19) Europäisches Patentamt
European Patent Office
Office européen des brevets

(11) **EP 3 330 745 A1**

(12) **EUROPÄISCHE PATENTANMELDUNG**

(43) Veröffentlichungstag:
**06.06.2018 Patentblatt 2018/23**

(51) Int Cl.:
*G01V 1/00* (2006.01)        *E21D 9/00* (2006.01)
*G01V 1/104* (2006.01)      *G01V 1/20* (2006.01)
*G01V 1/52* (2006.01)

(21) Anmeldenummer: **16201683.6**

(22) Anmeldetag: **01.12.2016**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Amberg Technologies AG
8105 Regensdorf-Watt (CH)**

(72) Erfinder:
• **Dickmann, Thomas
79793 Wutöschingen (DE)**
• **Krüger, Dirk
79761 Waldshut-Tiengen (DE)**

(74) Vertreter: **Kley, Hansjörg
Aeckerwiesenstrasse 9
8400 Winterthur (CH)**

(54) **VERFAHREN ZUR VORAUSERKUNDUNG IM TUNNELBAU**

(57) Verfahren zur vortriebsbegleitenden Vorauserkundung im Tunnelbau sind bekannt unter dem Begriff «Tunnel Seismic Prediction» TSP. Dazu werden in Schusslöchern (51, 51r) nichtzerstörend wirkende Sprengladungen (57, 57r) als Schüsse gezündet. Die von Felsdiskontinuitäten reflektierten Wellen werden von in Empfängerlöchern (52, 52r) angeordneten Empfängern (Rcvl, ..., Rcv2r) aufgenommen und mittels eines Auswerteprogramms zu einer die Felsdiskontinuitäten enthaltenden Seismogramm-Sektion dargestellt. Die Erstellung der Schuss- (51, 51r) und Empfängerlöcher (52, 52r) bedingt erhebliche Ausfallzeiten und hat somit nachteilige Auswirkungen auf den Vortriebsfortschritt.

Zur signifikanten Reduktion der Ausfallzeiten beim Vortrieb wird vorgeschlagen, die Erstellung der Schuss- und Empfängerlöcher in den Vortrieb zu integrieren. Dazu werden die Bohrmittel der Vortriebsvorrichtung auch für die Erstellung der Schuss- (51, 51r) und Empfängerlöcher (52, 52r) eingesetzt.

FIG 1a

EP 3 330 745 A1

**Beschreibung**

Die vorliegende Erfindung bezieht sich auf ein Verfahren zur Vorauserkundung im Tunnelbau gemäss dem Patentanspruch 1.

Verfahren zur vortriebsbegleitenden Vorauserkundung im Tunnelbau sind unter dem Akronym TSP bekannt: TSP steht für «Tunnel Seismic Prediction». TSP ist eine geophysikalische Methode und verfolgt das Ziel, eine schnelle geologische und geotechnische Vorauserkundung im dreidimensionalen Raum durchzuführen, um die geologischen Kenndaten von Störzonen, Zonen hoher Klüftigkeit und von Karst kontinuierlich zu verbessern. Die Grundlagen dieser geophysikalischen Methode sind den Dokumenten

- «Integrated Seismic Imaging System For Geological Prediction During Tunnel Construction» [2];
- «Seismic prediction of geological structures ahead of the tunnel using tunnel surface waves» [6] und
- «Predicting ahead of the face - Tunnel Seismic Prediction» [9]

zu entnehmen.

Eine konsequente Anwendung dieser innovativen Technologie TSP fördert das Bauen sehr komplexer Untertagebauwerke innerhalb kurzer Zeit. Dabei setzen die Sicherheit und der Leistungsfortschritt des Vortriebs genügend gute Kenntnisse über die Felsstruktur voraus der Tunnelbrust voraus.

Das TSP-Messkonzept basiert auf der Aussendung von Raumwellen, die bevorzugt durch kleine Sprengladungen in dafür vorbereiteten Schusslöchern erzeugt werden, siehe dazu zB die vorgenannten Dokumente [2] und [6] sowie das Dokument - «3D Tunnel Seismic Prediction» [8]. Treffen solche Raumwellen (Kompressions- und Scherwellen) auf Diskontinuitäten im Gebirge, wie sie Formationswechsel, Störflächen oder Karststrukturen darstellen, wird ein Teil der Energie reflektiert, der mit eigens dafür entwickelten Empfängern registriert wird. Die vorstehend aufgeführten Beispiele von Diskontinuitäten werden im Folgenden mit dem Oberbegriff Felsdiskontinuität bezeichnet. Mit der Aufzeichnung von zB 24 solcher Schüsse aus kleinen Bohrlöchern entlang einer Ulmenstrecke (=unterer Tunnelwandbereich) von etwa 46m Länge (aus 23 Abständen zu 2m) wird eine Seismogramm-Sektion zusammengestellt, die durch eine zielgerichtete Datenverarbeitung derartige Reflektoren bzw. Felsdiskontinuitäten extrahiert. Die Aufzeichnung eines Schusses s durch einen Empfänger Rcv wird als seismische Spur bezeichnet. Diese aus den seismischen Spuren extrahierten Abbildungen von Felsdiskontinuitäten werden in 2- und 3-dimensionalen Ansichten und auf die Tunnelachse bezogen dargestellt und beinhalten so ein mögliches geologisches Bild bzw. Gefahrenpotential etwa 150 Meter voraus der Tunnelbrust. Dieses geologische Bild wird synonym auch als 3D-Vorauserkundungsbild oder als Seismogramm-Sektion bezeichnet.

Es werden mindestens 18 als seismische Quelle dienende Schüsse in regelmässigen Distanzen im Bereich 1m bis 2m zueinander entlang einer Ulme (auch Tunnelwand genannt) bzw. entlang einer Ulmenstrecke benötigt, um ein aussagekräftiges Resultat zu erzielen. Besser sind jedoch 24 Schüsse. Das Bohren der mindestens 1,50m tiefen Schusslöcher mit einem Durchmesser von 32mm bis 45mm erfordert eine Vorbereitungszeit je nach Art der Bohrausrüstung (pneumatische Bohrstütze oder hydraulisch betriebener Bohrwagen) zwischen anderthalb und sechs Stunden für 24 Bohrungen. Zusätzlich zu den Bohrungen benötigt das anschliessende Schiessen/Zünden der kleinen Sprengladungen in den Bohrungen zwischen anderthalb und vier Stunden je nach Erfahrung und Geschicklichkeit der Anwender. Beim sogenannten Einzelschussverfahren muss jeder Schuss einzeln ausgelöst werden. Dabei muss bei jedem Schuss ein erforderlicher Sicherheitsabstand des Baustellenpersonals eingehalten werden. Das einzelne Schiessen ist erforderlich, um damit die Nullzeit eines Schusses mit einer hohen Genauigkeit mittels einer Auslösevorrichtung/Schiessmaschine zur Schussaufnahme aufnehmen zu können. Dazu wird eine Triggerbox für den Start der Signalaufzeichnung eingesetzt. Zwischen den einzelnen Schüssen muss durch Baupersonal das Schiesskabel an die nächste zu zündende Sprengladung geführt werden. Dies erklärt den relativ hohen Zeitbedarf von anderthalb bis vier Stunden.

Durch die Kenntnis der Nullzeiten aller aufeinanderfolgenden Schüsse in unterschiedlichen Distanzen zueinander, können die Ankunftszeiten der direkten und reflektierten Wellen genau bestimmt werden, um daraus wiederum die Geschwindigkeiten der durch das Gebirge laufenden Wellen zu berechnen. Diese Geschwindigkeiten geben Kenntnis über die Felsdiskontinuitäten voraus der Tunnelbrust und radial/seitlich zum Tunnel.

Der gesamte Vorgang einer TSP-Messung inklusive der Erstellung der benötigten Bohrlöcher kann demzufolge bis zu zehn Stunden dauern.

Je nach verfügbarem Raum und Zugänglichkeit im Tunnelvortriebsbereich benötigen die Tätigkeiten allein zur Erstellung der erforderlichen Schuss- und Empfängerlöcher durchschnittlich sechs Stunden. Dies ist gleichzeitig eine Ausfallzeit für die Arbeiten des Tunnelvortriebs. Diese Verzögerungen können dazu führen, dass der Gesamtvortrieb hinter dem vorgeschriebenen Zeitplan bleibt, wenn die TSP-Messungen nicht von Beginn an im Zeitplan vorgesehen waren. Die Zeitverzögerungen führen zwangsweise auch zu Erhöhungen der zeitabhängigen Baustellenkosten wie Personalaufwendungen und das Vorhalten von Installationen und Energieausgaben.

Der vorstehend beschriebene Messablauf und Messaufbau erfolgt in Intervallen von ca. 120m bei einer Erkundungsreichweite von durchschnittlich 150m voraus der Tunnelbrust.

Es ist auch möglich, eine vortriebsbegleitende Vorauserkundung ohne Benutzung von Sprengladungen durchzuführen. Einzelheiten dazu können den Schriften

«Seismic-while-drilling by using tunnel boring machine noise» [1] und-
«IMPULSGENERATOR, INSBESONDERE ZUR ANREGUNG SEISMISCHER WELLEN», WO 2009/077102 A1 [10]

entnommen werden.

Das Verfahren mit einer Signalaussendung durch das drehende Schneidrad einer Tunnelbohrmaschine erfordert zusätzlich die permanente Anwesenheit eines Geophysikers.

Weder unter Verwendung eines Impakthammers noch mit der Methode der sogenannten passiven Seismik, nach der hier die Schneidwerkzeuge einer Tunnelbohrmaschine TBM als Signalquelle verwendet werden, kann die erforderliche Reichweite und Genauigkeit der geforderten Vorauserkundung voraus der Tunnelbrust erreicht werden.

Eine wesentliche Verbesserung zum vorstehend erläuterten Einzelschussverfahren stellt das Mehrschussverfahren dar, bei dem mehrere Schüsse zu einer Schussgruppe zusammengefasst werden und die einzelnen Schüsse in einem zeitlichen Abstand von > 1s gezündet werden. Dieses Mehrschussverfahren ist in der europäischen Patentanmeldung EP16185227.2 offenbart und beansprucht. Es gilt, den Ablauf der TSP-Messungen weiter zu optimieren. Unter einer «TSP-Messung» wird die Gesamtheit der erforderlichen Schritte vom Bohren eines Schussloches bis zur Aufzeichnung der seismischen Spuren verstanden.

Der vorliegenden Erfindung liegt daher die Aufgabe zugrunde, ein Verfahren zur Vorauserkundung im Tunnelbau unter Benutzung von nicht zerstörend wirkenden Sprengladungen anzugeben, das die vorstehend genannten Ausfallzeiten bei der Erstellung der Spreng- und Signallöcher bzw. Empfängerlöcher deutlich verringert und in einer kontinuierlicheren Weise eine genügende Anzahl von seismischen Spuren für die Generierung eines hochauflösenden Vorauserkundungsbildes bereitstellt.

Diese Aufgabe wird erfindungsgemäss gelöst durch ein Verfahren zur Vorauserkundung der einen Tunnel umgebenden Felsstruktur, wobei:

- der Tunnelvortrieb mit einer Tunnelvortriebsvorrichtung erfolgt;
- auf einer Ulmenstrecke des Tunnels eine Mehrzahl von seitlich angeordneten Schusslöchern je mit einer Sprengladung gefüllt werden;
- entfernt von den Schusslöchern auf der gleichen Ulmenstrecke Empfängerlöcher für die Aufnahme von Empfängern vorgesehen sind und die Empfänger durch das Zünden der Sprengladungen erzeugte Schüsse ausgelöste direkte und von Felsdiskontinuitäten der Felsstruktur reflektierte Wellen als seismische Spur registrieren;
- die von den Empfängern registrierten seismischen Spuren den einzelnen Schüssen zugeordnet und einem Auswerteprogramm zugeführt werden, um eine die Felsdiskontinuitäten enthaltende Seismogramm-Sektion zu generieren, die die umgebende Felsstruktur darstellt;
- die Tunnelvortriebsvorrichtung Bohrmittel enthält, mit denen Schusslöcher auf der einen Ulmenstrecke so gebohrt werden, dass die Schusslöcher aufeinanderfolgend je äquidistant angeordnet sind,
- im weiteren Verlauf des Vortriebs einzelne weiter hinten von der Tunnelbrust entfernte Schusslöcher als Empfängerlöcher mit Empfängern bestückt werden, wobei der Abstand zwischen zwei benachbarten Empfängerlöchern ein konstantes Vielfaches des Abstandes zweier benachbarter Schusslöcher beträgt.

Daraus ergeben sich folgende Vorteile:

(a) Durch das Vorsehen eines konstanten Vielfachen des Abstandes zweier benachbarter Empfängerlöchern vom Abstand zweier benachbarter Schusslöcher brauchen nicht separate Empfängerlöcher gebohrt zu werden.

(b) Mit den Bohrmitteln der Tunnelvortriebsvorrichtung braucht es - ausser einer spezifischen Zusatzanweisung an das Bohrpersonal - keine weitere Infrastruktur für die Erstellung der Schuss- und Empfängerlöcher. Es ist auch kein Sonderpersonal dazu aufzubieten.

(c) Die hintersten eingesetzten Empfänger werden im weiteren Verlauf des Tunnelvortriebs nach vorne versetzt und entsprechend mit einer zentralen Aufzeichnungseinrichtung neu verbunden. Es ist lediglich die Zuordnung anzupassen, dies kann auch software-mässig realisiert werden.

Vorteilhafte Ausgestaltungen der Erfindung sind in weiteren Ansprüchen angegeben. So können sich die folgenden Vorteile ergeben:

i) Durch das Vorsehen eines konstanten Vielfachen des Abstandes zweier benachbarter Schusslöcher für den Abstand zweier Empfänger kann einerseits auf die spezifischen Eigenschaften der den Tunnel umgebenden Felsstruktur eingegangen werden und trotzdem ist die Wiederverwendung von Schusslöchern als Empfängerlöcher dadurch gewährleistet. Das vorgenannte konstante Vielfache ist dabei eine ganze Zahl aus dem Intervall 4, ... , 10 einschliesslich der Intervallgrenzen (Anspruch 4).

ii) Durch das Umplatzieren im weiteren Verlauf des Vortriebs der am weitesten entfernten Empfänger vor die am wenigsten weit entfernten Empfänger mit Abstand des genannten konstanten Vielfachen, wird die benötigte Infrastruktur optimal genutzt (Anspruch 6).

iii) Durch das Laden (mit Sprengstoff) der Schusslöcher und der Löcher für den Vortrieb im gleichen Arbeitsschritt wird der Einsatz von dem dafür eigens erforderlichen Fachpersonal optimiert. Diese Mehrfachladung ist deshalb möglich, weil die Sprengladungen für die TSP-Messungen nicht zerstörend wirken (Anspruch 8).

Die Erfindung wird nachfolgend anhand der Zeichnung beispielsweise näher erläutert. Dabei zeigen:

Figur 1a Tunnelgrundriss mit an den beiden Ulmenstrecken angeordneten Schusslöchern/Sprengladungen und Empfängerlöchern/Empfängern zur Vorauserkundung;

Figur 1b Tunnelquerschnitt mit der Anordnung von Empfängern in Empfängerlöchern längs der beiden Ulmenstrecken;

Figur 1c Tunnelquerschnitt mit der Anordnung von Sprengladungen in Schusslöchern längs der beiden Ulmenstrecken;

Figur 2a Anordnung von Schusslöchern/Sprengladungen und Empfängerlöchern/Empfängern in einer Phase 1 des Vortriebs;

Figur 2b Anordnung von Schusslöchern/Sprengladungen und Empfängerlöchern/Empfängern in einer Phase 2 des Vortriebs;

Figur 2c Anordnung von Schusslöchern/Sprengladungen und Empfängerlöchern/Empfängern in einer Phase 4 des Vortriebs;

Figur 3 Seismische Aufzeichnung der direkten Kompressionswellen einer Schussgruppe von 5 Schüssen.

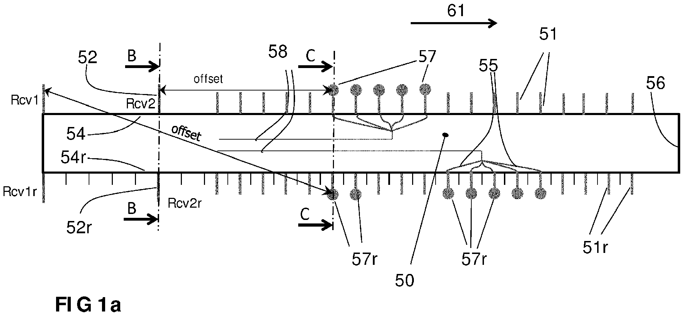

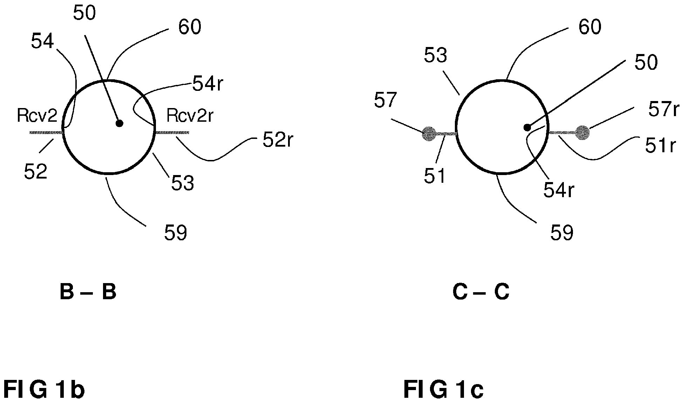

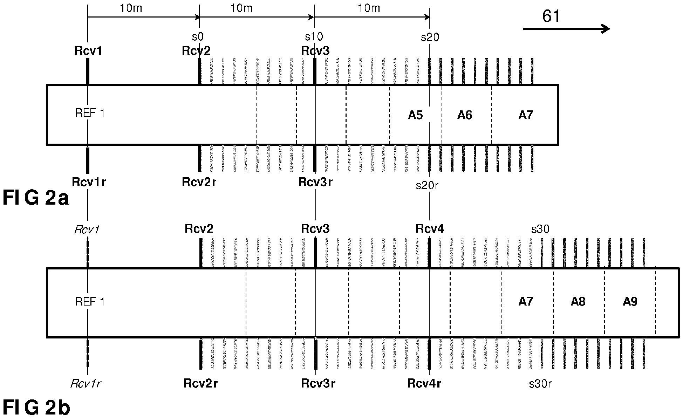

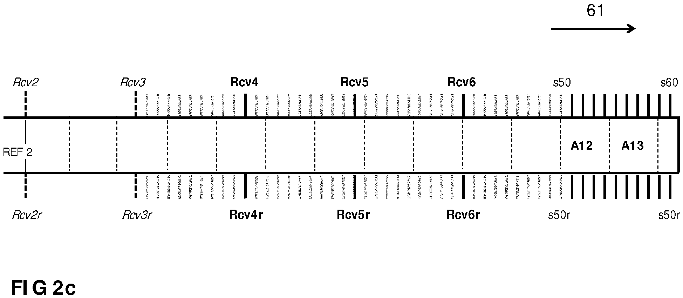

Die Figuren 1a, 1b und 1c erläutern die Anordnung der für die Vorauserkundung im Tunnelbau erforderlichen Elemente/Komponenten, damit bei der Beschreibung einer Ausführungsform der vorliegenden Erfindung gemäss den Figuren 2a, 2b und 2c diese Elemente nicht auch noch eingeführt werden müssen.

Figur 1a zeigt einen Grundriss eines Tunnels 50 mit der Tunnelbrust 56 und der Vortriebsrichtung 61, also von links nach rechts. Im bereits ausgebrochenen Teil des Tunnels 50 sind längs der beiden Ulmenstrecken 54 und 54r Schusslöcher 51/51r und Empfängerlöcher 52/52r angeordnet. In der Darstellung gemäss FIG 1a ist der Abstand zwischen der Tunnelbrust 56 und dem zur Tunnelbrust nächstliegenden Schussloch 51/51r als eine Momentan-Aufnahme anzusehen. Dieser Abstand beträgt normalerweise wenige Meter. Die Schusslöcher 51/51r und Empfängerlöcher 52/52r unterscheiden sich nicht bezüglich Länge und Durchmesser, lediglich durch den Zweck: Die seismischen Empfänger Rcv1, Rcv1r bzw. Rcv2 Rcv2r sind paarweise gegenüber in Empfängerlöchern 52 und 52r angebracht; der Buchstabe «r» in der Bezeichnung 51r/54r/Rcv2r steht für die rechts angeordneten Schusslöcher bzw. Empfängerlöcher bzw. die rechte Ulmenstrecke, für die links angeordneten Elemente wird keine zusätzliche Bezeichnung verwendet.

Der Abstand der Schusslöcher 51/51r ist über alle Schusslöcher 51 gleich - also äquidistant - und beträgt vorzugsweise 1m; es sind auch Schusslochabstände bis zu einem Wert von ca. 2.5m möglich. Diese Äquidistanz der Schusslöcher 51/51r versteht sich mit der im Tunnelbau anwendbaren üblichen Genauigkeit. Der Abstand zwischen den Empfängerlöchern 52/52r beträgt vorzugsweise das 5- oder 10-fache des Abstandes der Schusslöcher 51/51r. Sind die Schusslochabstände grösser, ist der Abstand zwischen zwei Empfängerlöchern nur ebenfalls ein ganzzahliges Vielfaches des Abstandes zweier aufeinanderfolgender Schusslöcher, zB 4-fach oder 6-fach. Damit ist auch definiert, dass im Verlaufe des Tunnelvortriebs einzelne zunächst als Schusslöcher 51/51r benutzte Bohrungen später als Empfängerlöcher 52/52r benutzt werden. Die Sprengladungen 57/57r sind so dimensioniert, dass eine Explosion bezüglich des betreffenden Schussloches 51 nicht zerstörend ist. Die Sprengladung 57 wird im jeweiligen Schussloch 51 mit Wasser verdämmt oder das Schussloch 51 wird mit einer Dämmpatrone (nicht dargestellt in den Figuren) abgeschlossen, damit bei der Detonation der Sprengladung 57 möglichst viel Energie in den Fels übergeht. Somit ist eine Wiederverwendung eines Schussloches 51/51r als Empfängerloch 52/52r mit dem Fortschritt des Tunnelvortriebs sichergestellt.

Unter dem Begriff Empfänger Rcv wird eine Einheit verstanden, die einen Sensor enthält, der zur Registrierung von Wellen aus der Felsstruktur vorgesehen ist. Typischerweise ist ein solcher Sensor als Beschleunigungssensor/Accelerometer ausgebildet. Diese Einheit - genannt «Empfänger» Rcv/Rcvr - wird in ein Empfängerloch 52/52r eingeschoben. Im Folgenden wird nicht mehr strikt unterschieden zwischen einem Empfängerloch 52 (=Bohrloch) und dem einen Sensor enthaltenden Empfänger Rcv. Stattdessen wird stets auf die in den Empfängerlöchern 52/52r befindlichen Empfänger Rcv1, ... , Rcv2r, ... Bezug genommen. Der Begriff «Offset» steht für eine Distanz zwischen einem seismischen Empfänger Rcv und einer in einem Schussloch 51 eingeführten Sprengladung 57. Der Übersichtlichkeit halber sind in FIG 1a nur zwei Offsets explizit dargestellt. Dies erfolgt an dieser Stelle ohne Indizierung bezüglich eines Schusses s und eines Empfängers Rcv. Der Begriff «Schuss» s steht für das Abfeuern einer in einem Schussloch 51/51r enthaltenen Sprengladung 57/57r. Es werden N Offsets verwendet entsprechend der jeweiligen Anzahl m von Sprengladungen 57 und der jeweiligen Anzahl n von Empfängern Rcv für eine Schussfolge; Anzahl N von Offsets in einer Formel:

$$N = m \cdot n \ .$$

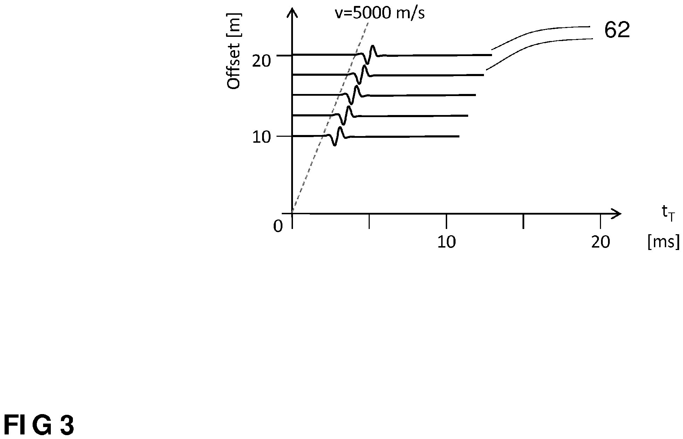

FIG 3 zeigt eine seismische Aufzeichnung über die Laufzeit $t_T$ der direkten Kompressionswellen von 5 von einem Empfänger Rcv einzeln aufgezeichneten Schüssen mit einem Schusslochabstand von 2.5m und einer Geschwindigkeit der Kompressionswelle von hier 5000 m/s wie dies typisch ist im Granit, was die gestrichelte Linie anzeigt. «Direkte Kompressionswelle» steht hier für die von einem Empfänger Rcv registrierte Kompressionswelle direkt von der Sprengladung 57, also eine nicht an Diskontinuitäten reflektierte Welle. Die Darstellung in FIG 3 ist eigentlich dreidimensional, da die Aufzeichnungen eine Amplitude des empfangenen Signals darstellen und nicht in der Ordinate eine "Verschiebung" des Offsets. Die Aufzeichnung der an Felsdiskontinuitäten reflektierten Welle ist in Figur 3 nicht dargestellt. Eine solche Aufzeichnung der direkten Kompressionswelle und der reflektierten Welle eines Schusses wird als seismische Spur bezeichnet. Der zu FIG 3 angegebene Schusslochabstand von 10m / (5-1) = 2.5m ist rein bespielhaft; die Ziffer 5 steht für die fünf Schüsse, die der FIG 3 zugrunde gelegt sind. Es sind auch kleinere Schusslochabstände möglich wie im nachstehend beschriebenen Bereich angegeben.

In FIG 1b ist der Tunnelquerschnitt 53 mit zwei Empfängern Rcv2/Rcv2r auf den beiden Ulmenstrecken 54/54r als Schnitt B - B gemäss der FIG 1a dargestellt. Die seismischen Empfänger Rcv2, Rcv2r sind genau seitlich von den beiden Ulmenstrecken 54/54r in einem bestimmten Abstand, typischerweise 2m tief in einem jeweiligen Empfängerloch 52 in das Gebirge versetzt. Der Tunnel 50 ist nach oben durch die Firste 60 beschränkt und nach unten durch die Sohle 59.

In FIG 1c ist der Tunnelquerschnitt 53 mit zwei Sprengladungen 57/57r auf den beiden Ulmen als Schnitt C - C gemäss der FIG 1a dargestellt.

Aus den Darstellungen gemäss FIG 1b und FIG 1c darf für die vorliegende Erfindung nicht abgeleitet werden, dass stets gegenüberliegend Empfänger Rcv und Sprengladungen 57 vorgesehen sind. Die Anordnung der Empfänger Rcv und Sprengladungen 57 ist in den späteren Abschnitten beschrieben. Der Tunnelquerschnitt 53 ist hier als Kreis dargestellt. Der Tunnelquerschnitt 53 kann auch eine einigermassen flache Sohle 59 aufweisen, nämlich dann wenn der Tunnel im Sprengvortrieb ausgebrochen wird.

In der FIG 1a sind schematisch mehrere Sprengladungen 57 bzw 57r zu einer Schussgruppe wie folgt zusammengefasst: Die Schüsse einer Schussgruppe sind in einem zeitlichen Abstand von mindestens 1s zu zünden. Dies wird durch den Einsatz von in den handelsüblichen Zündern eingebauten Verzögerungsstufen gewährleistet. Handelsübliche Zünder weisen typische Verzögerungszeiten von etwa 1ms bis etwa 10s auf. Damit der zeitliche Abstand von mindestens 1s gewährleistet ist, sind die Zünder der verschiedenen Verzögerungszeiten entsprechend den einzelnen Schusslöchern 51 zuzuordnen. Die Zünder der einzelnen Sprengladungen 57 einer Schussgruppe sind mit Zündkabeln 55 verbunden, die dann zu einer in der FIG 1a nicht dargestellten in einem Sicherheitsabstand abgesetzten Auslösevorrichtung/Schiessmaschine geführt werden. Dabei wird zur Auslösevorrichtung bzw. Schiessmaschine nur ein einziges Schiesskabel 58 (2-Draht geführt). Der erste Schuss einer Schussgruppe muss dabei die wahre Nullzeit aufweisen. Als Verzögerungsstufe können auch elektronische programmierbare Zünder eingesetzt werden.

Werden anstelle von Schussgruppen nur Einzelschüsse abgefeuert, entspricht dies der in der Beschreibungseinleitung erläuterten TSP-Messung, zB gemäss dem Dokument «3D Tunnel Seismic Prediction» [8].

Eine bevorzugte Ausführungsform der Erfindung wird nun anhand der FIG 2a, FIG 2b und FIG 2c erläutert. Diese FIG 2a, FIG 2b und FIG 2c zeigen verschiedene Phasen des Vortriebs:

Phase 1, Phase 2 und eine Phase 4. Die Anordnung und Benennung/Nummerierung der Elemente/Komponenten in der nicht dargestellten Phase 3 ergeben sich unmittelbar aus den FIG 2b und FIG 2c. FIG 2a zeigt die in den FIG 1a bis FIG 1c erläuterten Elemente/Komponenten in einer schematischen Darstellung in einer Phase 1 des Tunnelvortriebs. Mit A7, A6 und A5 sind die Abschläge bezeichnet. Der Begriff «Abschlag» bezeichnet einen Fortschritt im Tunnelbau, der sich regelmäßig wiederholt, wenn gebohrt und gesprengt worden ist und die Gesteinsmassen wegbefördert sind, bis wieder gebohrt werden kann. Der nächste in FIG 2a noch nicht dargestellte Abschlag trägt dann die Nummer A8, siehe FIG 2b. Mit Rcv1/Rcv1r; ...; Rcv3/Rcv3r sind 2 x 3 paarweise gegenüberliegende Empfänger bezeichnet, die bezüglich der Tunnelachse in einem Abstand von je 10m angeordnet sind. Mit s0, ..., s19 (s19 ist in FIG 2a nicht dargestellt) sind die bei vorangehenden Messungen verwendeten Schüsse bezeichnet. Für die nächstfolgende TSP-Messung werden Schüsse s20, ..., s29 abgefeuert.

Im Tunnelbau im Fels erfolgt der Vortrieb entweder durch eine Tunnelbohrmaschine TBM oder durch Sprengvortrieb. Beim Sprengvortrieb werden Bohrlafetten auf Bohrwagen (auch Bohrjumbos genannt) für das Bohren der Sprenglöcher in der Tunnelbrust 56 eingesetzt. Um durch die TSP-Messungen möglichst wenig Verzögerungen zu verursachen, werden die Bohrlafetten um 90° gedreht und entsprechend der Anordnung gemäss der FIG 1c werden die Sprenglöcher 51 in regelmässigen Abständen (äquidistant) gebohrt.

Wird für den Vortrieb eine Tunnelbohrmaschine eingesetzt, ändert sich bezüglich der Erstellung der Sprenglöcher 51 für die TSP-Messung nichts, da die Tunnelbohrmaschinen in der Regel zusätzlich mit Bohrlafetten ausgerüstet sind. Diese Bohrlafetten dienen primär zur Erstellung der ersten Felssicherung mittels langen Felsankern, die radial in die zuvor gebohrten Löcher versetzt werden. Diese an der TBM angebrachten Bohrlafetten sind schwenkbar und können ohne irgendwelche Einschränkungen auch für die Bohrung der Sprenglöcher 51/51r gemäss der Anordnung in FIG 1c verwendet werden. Die Darstellungen gemäss den FIG 2a bis FIG 2c treffen somit auch beim Einsatz einer TBM zu. Die in den FIG 2a bis FIG 2c dargestellten «Abschläge» A entsprechen beim Vortrieb mit einer TBM einem bestimmten ausgebohrten Tunnelabschnitt. Der operationelle Ablauf der TSP-Messung ist unabhängig von der Art des Vortriebs. Eine Tunnelbohrmaschine TBM und die für den Sprengvortrieb benötigten Bohrwagen bzw. Bohrjumbos werden in dieser Schrift mit dem Oberbegriff «Tunnelvortriebsvorrichtung» zusammen gefasst, wobei diese Tunnelvortriebsvorrichtung Bohrmittel zum Bohren von Löchern für die Schuss- und späteren Empfängerlöcher wie auch ggf. für das Bohren der Löcher für den Sprengvortrieb aufweist.

Normalerweise werden mehrere Abschläge A gemacht. Dies ist in den FIG 2a, FIG 2b und FIG 2c dargestellt mit der Abfolge der Abschläge A5, A6, .... Sobald eine bestimmte Länge des Vortriebs gemacht worden ist, zB > 10m, werden die sequentiell mit dem Vortriebsfortschritt gebohrten Sprenglöcher 51/51r mit Sprengladungen 57/57r geladen. Das Schiessen kann dabei schussgruppenweise oder in Einzelschüssen erfolgen. Unmittelbar nach einer TSP-Messung mit der entsprechenden Anzahl von Schüssen erfolgt die Sprengung eines weiteren Vortriebsabschnittes (oder ein Vortrieb mit der TBM). Da die Sprengungen für die TSP-Messung nicht zerstörend sind, kann durch das Sprengpersonal unmittelbar anschliessend die Sprengung für den Vortrieb erfolgen, dh die Bohrlöcher für den Vortrieb sind bereits mit Sprengstoff geladen. Im Ablauf bedeutet dies einen erheblichen Zeitgewinn gegenüber der bisherigen separaten Bohrung von Bohrlöchern und dem separaten Abfeuern von Schüssen s für die TSP-Messungen.

Auf diese Weise stehen für die Auswertung durch das Auswerteprogramm die Daten quasikontinuierlich gemäss dem Vortrieb zur Verfügung. Dies wird für die vorgenannte bevorzugte Ausführungsform anhand der folgenden Tabellen dargestellt.

Tabelle 1: Zuordnung der Schüsse zu den Empfängern nach einer Phase 1 des Vortriebs gemäss der Darstellung in FIG 2a.

| Empfänger Rcv | Schüsse s |
|---|---|
| 1 und 1r | 0-29<br>0-29r |
| 2 und 2r | 10-29<br>10r-29r |
| 3 und 3r | 20-29<br>20r-29r |

Nach einer Phase 1 des Vortriebs entsprechend der Darstellung in FIG 2a stehen 100 seismische Spuren für ein 3D-Vorauserkundungsbild 1 zur Verfügung; dies berechnet sich aus den je 30 von den Empfängern 1 und 1r aufgezeichneten seismischen Spuren und aus den je 20 von den Empfängern 2 und 2r aufgezeichneten seismischen Spuren. In FIG 2a ist mit REF 1 der Referenzpunkt für die Generierung des 3D-Vorauserkundungsbildes aus den vorerwähnten 100 seismischen Spuren bezeichnet. Die von den Empfängern Rcv3/Rcv3r empfangen seismischen Spuren werden in der Phase 1 nicht berücksichtigt.

Tabelle 2: Zuordnung der Schüsse zu den Empfängern nach einer Phase 2 des Vortriebs gemäss der Darstellung in FIG 2b.

| Empfänger Rcv | Schüsse s |
|---|---|
| 1 und 1r | 0-29<br>0r-29r |
| 2 und 2r | 10-39<br>10r-39r |
| 3 und 3r | 20-39<br>20r-39r |
| 4 und 4r | 30-39<br>30r-39r |

Nach einer Phase 2 des Vortriebs stehen 160 (aus 30 + 30 + 30 + 30 +20 +20) seismische Spuren für ein 3D-Vorauserkundungsbild 2 zur Verfügung. In FIG 2b ist mit REF 1 der Referenzpunkt für die Generierung des 3D-Vorauserkundungsbildes aus den vorerwähnten 160 seismischen Spuren bezeichnet. In FIG 2b sind die nicht mehr benötigten Empfänger Rcv1 und Rcv1r kursiv dargestellt. Die in der vorstehenden Tabelle angegebenen Schüsse 0-29 und 0r bis 29r entstammen der vorangehenden Schussfolge. Die von den Empfängern Rcv4/Rcv4r empfangen seismischen Spuren werden in der Phase 2 nicht berücksichtigt.

Tabelle 3: Zuordnung der Schüsse zu den Empfängern nach einer weiteren Phase des Vortriebs.

| Empfänger Rcv | Schüsse s |
|---|---|
| 1 und 1r | 0-29<br>0r-29r |
| 2 und 2r | 10-39<br>10r-39r |
| 3 und 3r | 20-49<br>20r-49r |
| 4 und 4r | 30-49<br>30r-49r |
| 5 und 5r | 40-49<br>40r-49r |

Nach weiterer Phase des Vortriebs stehen 220 (aus 30 + 30 + 30 + 30 +30 +30 + 20 + 20) seismische Spuren für ein 3D-Vorauserkundungsbild 3 zur Verfügung. Mit dem Umplatzieren der Empfänger Rcv1/Rcv1r nach vorne als Empfänger Rcv5/Rcv5r verschiebt sich auch der Referenzpunkt REF, neu ist REF2 der Referenzpunkt für die Generierung des 3D-Vorauserkundungsbildes aus den vorerwähnten 220 seismischen Spuren. Die von den Empfängern Rcv5/Rcv5r empfangen seismischen Spuren werden in dieser weiteren Phase nicht berücksichtigt.

Tabelle 4: Zuordnung der Schüsse zu den Empfängern nach einer Phase 4 des Vortriebs gemäss der Darstellung in FIG 2c.

| Empfänger Rcv | Schüsse s |
|---|---|
| 2 und 2r | 10-39<br>10r-39r |
| 3 und 3r | 20-49<br>20r-49r |
| 4 und 4r | 30-59<br>30r-59r |

(fortgesetzt)

| Empfänger Rcv | Schüsse s |
|---|---|
| 5 und 5r | 40-59<br>40r-59r |
| 6 und 6r | 50-59<br>50r-59r |

Nach einer Phase 4 des Vortriebs stehen 220 (aus 30 + 30 + 30 + 30 +30 +30 +20 +20) seismische Spuren für ein 3D-Vorauserkundungsbild 4 zur Verfügung. Die in der vorstehenden Tabelle angegebenen Schüsse 10-39/10r-39r und 20-49/20r-49r entstammen der vorangehenden Schussfolge. Aus Aufwand- und aus Messgründen stehen in dieser Phase 4 die Empfängerpaare Rcv2/Rcv2r und Rcv3/Rcv3r nicht mehr zur Verfügung. Diese Empfängerpaare sind "rollierend" nach vorne in Richtung Tunnelbrust verschoben worden: In der FIG 2c ist Rcv3/Rcv3r zum Empfängerpaar Rcv6/Rcv6r geworden. Die vorgenannte Zahl von 220 seismischen Spuren bleibt bei dieser Anordnung im Verlauf des weiteren Vortriebs konstant. Ab Phase 4 wird somit jedes 3D-Vorauserkundungsbild aus 220 seismischen Spuren gebildet. Ein neues 3-D Vorauserkundungsbild wird alle 10m resp. nach der Verschiebung des hintersten Empfängerpaars nach vorne erzeugt. Somit wird der Referenzpunkt REF, der den Ursprung eines 3D-Vorauserkundungsbildes darstellt, um dieselbe Strecke nach vorne verschoben. Im "rollierenden Verfahren" des Vortriebs also gemäss FIG 2c bleiben 6 Empfänger Rcv gleichzeitig eingesetzt. Danach werden alle 10m Vortrieb resp. mit dem Versetzen der hintersten Empfänger an die vorderste Position ein neuer Referenzpunkt REF, also REF3, REF4, ... , gesetzt und somit ein neues Vorauserkundungsbild erzeugt. Die von den Empfängern Rcv6/Rcv6r empfangen seismischen Spuren werden der Phase 4 nicht berücksichtigt.

Die vorstehenden Tabellen beinhalten die zur Tunnelachse parallelen Offsets. Werden zusätzlich die Offsets von Schüssen auf der einen Ulmenstrecke zu den Empfängern auf der anderen Ulmenstrecke hinzugenommen, verdoppelt sich die vorstehende zu den Tabellen angegebene Anzahl seismischer Spuren.

Der operationelle Schiess- und Messablauf beinhaltet somit folgende Schritte:

(i) Einzelne Schüsse oder eine Schussgruppe werden nach einem oder mehreren Sprengabschlägen (bzw. Ausbruchfortschritt bei Verwendung einer TBM) des Tunnelvortriebs direkt vor dem nächsten Vortriebsabschlag abgefeuert. Diese Vorgehensweise hat den Vorteil einer erheblichen Zeitersparnis, da die Bohrlafette bereits an der Tunnelbrust 56 platziert ist und die Tunnelbrust 56 durch Sprengpersonal für den nächsten Abschlag A vorbereitet wird.

(ii) Der Schritt (i) an der Tunnelbrust 56 wird vor jedem oder jedem zweiten bis dritten Abschlag wiederholt. Dies gewährleistet ein kontinuierliches Fortschreiten des Schiess- und Messablaufs, der so in den Vortriebszyklus integriert wird, so dass der logistische Aufwand verringert wird.

(iii) Sobald eine genügende Distanz vorgetrieben und eine entsprechende Anzahl von Einzelschüssen oder Schussgruppen abgefeuert worden ist, werden die zwei hintersten Empfänger um 30m in Richtung Tunnelbrust 56 versetzt, während das Abfeuern von Einzelschüssen oder von Schussgruppen kontinuierlich weiter erfolgt. Dieser Schritt wird alle 10m wiederholt.

Vorstehend ist ein bevorzugtes Ausführungsbeispiel detailliert mit numerischen Angaben beschrieben. Die Erfindung ist nicht auf dieses Ausführungsbeispiel beschränkt, je nach Situation können andere numerische Werte angebracht sein wie (nicht abschliessende Aufzählung):

a) Der Abstand der Schusslöcher 51/51r kann auch grösser sein, also zB 1.5m, 2m oder 2.5m.

b) Der Abstand der Empfängerlöcher 52 braucht nicht das 10-fache des Abstandes der Schusslöcher 51 zu sein, ein anderes konstantes ganzzahliges Vielfaches dieses Abstandes ist möglich, dies je nach Art des Tunnels, nach Art der Felsstruktur oder gemäss den Anforderungen an die Aussagekräftigkeit der 3D-Vorauserkundungsbilder. Dieses ganzzahlige Vielfache ist bevorzugt aus dem Intervall 4, ..., 10 einschliesslich der Intervallgrenzen.

c) Es können rollierend insgesamt auch nur 4 statt 6 Empfänger Rcv verwendet werden, auch eine höhere Anzahl Empfänger Rcv steht nicht in Widerspruch zur Erfindung.

d) Die Dimensionierung der Schusslöcher (und späteren Empfängerlöcher) wie Durchmesser und Länge ist nicht auf die vorgenannten Werte von 32mm bis 45mm Durchmesser und 2m Tiefe beschränkt.

e) Die Anzahl Schüsse pro Schussgruppe oder der zeitliche Abstand der Schüsse in einer Schussgruppe kann auch andere Werte aufweisen. Nicht möglich ist jedoch ein zeitlicher Abstand der Schüsse von < 1s.

Anstelle der vorgenannten bevorzugten Ausführungsform der Erfindung ist auch eine einfachere Anordnung der Bohrlöcher für die TSP-Messungen praktikabel, allerdings mit einer geringeren Anzahl von seismischen Spuren. Der Nachteil der geringeren Anzahl seismischer Spuren kann in Einzelfällen durch den Vorteil des geringeren Bohraufwandes mit deutlichem Zeitgewinn kompensiert sein. Im Einzelnen sind diese einfacheren Anordnungen nachstehend mit A und B bezeichnet:

A

Es werden nur auf einer Ulmenstrecke 53 Sprenglöcher 51 gebohrt. Diese Sprenglöcher 51 werden dann im weiteren Verlauf des Vortriebs zu Empfängerlöchern 52, wiederum mit dem vorgenannten Vielfachen des Abstandes.

B

Die Anordnung B unterscheidet sich von der der Anordnung A dadurch, dass auf der anderen Ulmenstrecke 53r (siehe FIG 1b) im entsprechenden Abstand der Vielfachen zusätzlich Empfängerlöcher 52r für die Aufnahme von Empfängern Rcv1r, Rcv2r, gebohrt werden. Diese zusätzlichen Empfänger liegen genau gegenüberliegend den auf der anderen Ulmenstrecke angeordneten Empfängern. Dadurch erreicht man eine Verdopplung der Anzahl seismischer Spuren gegenüber der Anordnung A. Dadurch ist die Lage der Empfänger zum Voraus bestimmt. Diese Verdopplung ist leicht zu erreichen, da dies mit einem geringen Aufwand bezüglich des Bohrens der zusätzlichen Empfängerlöcher 52r auf der Ulmenstrecke 53r verbunden ist; es entfällt also das Bohren aller Löcher (Schusslöcher und Empfängerlöcher) im festgelegten Abstand.

Das vorstehend beschriebene Verfahren eines quasikontinuierlichen Schiessens für die Vorauserkundung - sei es in der bevorzugten Ausführungsform oder mit den einfacheren Anordnungen A resp. B wird in englischer Sprache prägnant mit «moving face shooting MFS» bezeichnet.

**Liste der Bezugszeichen, Abkürzungen und Glossar**

| | |
|---|---|
| 50 | Tunnel |
| 51, 51r | Schussloch |
| 52, 52r | Empfängerloch |
| 53 | Tunnelquerschnitt |
| 54, 54r | Ulmenstrecke |
| 55 | Zündkabel |
| 56 | Tunnelbrust |
| 57, 57r | Sprengladung |
| 58 | Schiesskabel |
| 59 | Sohle |
| 60 | Firste |
| 61 | Vortriebsrichtung |
| 62 | seismische Spur |
| A, A1, ..., | Abschlag, Abschlag mit einer entsprechenden Abschlagnummer |
| Rcv; Rcv1, Rcv1r; Rcv2;, Rcv2r; Rcv3, Rcv3r; Rcv4, Rcv4r; | Empfänger; Empfänger einer entsprechenden Lagenummer |

| REF, REF1, REF2, ... | Referenzpunkt |
| s; s0, s0r; s1, s1r; ..., | |
| s10, s10r; ..., s20, s20r; ... | Schuss; Schuss einer entsprechenden Lagenummer |
| offset | Distanz zwischen einem Empfänger Rcv in einem Empfängerloch 52 und einer Sprengladung 57 in einem Schussloch 51 |
| TBM | Tunnelbohrmaschine |
| TSP | «Tunnel Seismic Prediction»; geophysikalische Methode zur schnellen geologischen und geotechnischen Vorauserkundung im dreidimensionalen Raum |
| $t_T$ | Laufzeit / travel time |

**Liste der zitierten Dokumente**

[1] Lorenzo Petronio and Flavio Poletto (2002). «Seismic-while-drilling by using tunnel boring machine noise» Geophysics, 67(6), 1798-1809.

[2] Borm, G., Giese, R., Otto, P., Amberg, F., & Dickmann, T. (2003). «Integrated Seismic Imaging System For Geological Prediction During Tunnel Construction. International Society for Rock Mechanics» 10th ISRM Congress, 8-12 September 2003, Sandton, South Africa.

[3] Thomas Bohlen, Ulrich Lorang, Wolfgang Rabbel, Christof Müller, Rüdiger Giese, Stefan Lüth, Stefan Jetschny (2007). «Rayleigh-to-shear wave conversion at the tunnel face - From 3D-FD modeling to ahead-of-drill exploration» Geophysics, Nov 2007, Vol. 72, No. 6, pp. T67-T79

[6] Stefan Jetschny, Thomas Bohlen, Andre Kurzmann (2011). «Seismic prediction of geological structures ahead of the tunnel using tunnel surface waves» Geophysical Prospecting, Volume 59, Issue 5, pages 934-946, September 2011.

[8] TSP 303 - See ahead - build safer
«3D Tunnel Seismic Prediction»
vom Internet heruntergeladen am 29.07.2016: http://www.ambergtechnologies.ch/en/products/tunnel-seismics/tsp-303/

[9] Sattel, G., Sander, B. K., Amberg, F., Kashiwa, T. (1996). «Predicting ahead of the face - Tunnel Seismic prediction» TUNNELS & TUNNELING, APRIL 1996; p. 24 - p. 30

[10] WO 2009/077102 A1
«IMPULSGENERATOR, INSBESONDERE ZUR ANREGUNG SEISMISCHER WELLEN» GEOFORSCHUNGSZENTRUM POTSDAM
14473 Potsdam (DE)

**Patentansprüche**

1. Verfahren zur vortriebsbegleitenden Vorauserkundung der einen Tunnel (50) voraus einer Tunnelbrust (56) umgebenden Felsstruktur, wobei

   - der Tunnelvortrieb mit einer Tunnelvortriebsvorrichtung erfolgt;
   - auf einer Ulmenstrecke (54) des Tunnels (50) eine Mehrzahl von seitlich angeordneten Schusslöchern (51) je mit einer Sprengladung (57) gefüllt werden;
   - entfernt von den Schusslöchern (51) auf der gleichen Ulmenstrecke (54) Empfängerlöcher (52) für die Aufnahme von Empfängern (Rcv1, ..., Rcv4) vorgesehen sind und die Empfänger (Rcv1, ..., Rcv4) durch das Zünden der Sprengladungen (57) erzeugte Schüsse (s1, ..., ...) ausgelöste direkte und von Felsdiskontinuitäten der Felsstruktur reflektierte Wellen als seismische Spur registrieren;
- die von den Empfängern (Rcv1, ..., Rcv4) registrierten seismischen Spuren den einzelnen Schüssen (s1, ..., ...) zugeordnet und einem Auswerteprogramm zugeführt werden, um eine die Felsdiskontinuitäten enthaltende Seismogramm-Sektion zu generieren, die die umgebende Felsstruktur darstellt;

**dadurch gekennzeichnet, dass**

- die Tunnelvortriebsvorrichtung Bohrmittel enthält, mit denen Schusslöcher (51) auf der einen Ulmenstrecke (50) so gebohrt werden, dass die Schusslöcher (51) aufeinanderfolgend je äquidistant angeordnet sind;
- im weiteren Verlauf des Vortriebs einzelne weiter hinten von der Tunnelbrust (56) entfernte Schusslöcher (51) als Empfängerlöcher (52) mit Empfängern (Rcv1, ..., Rcv4) bestückt werden, wobei der Abstand zwischen zwei benachbarten Empfängerlöchern (52) ein konstantes Vielfaches des Abstandes zweier benachbarter Schusslöcher (51) beträgt.

2. Verfahren nach Anspruch 1,
**dadurch gekennzeichnet, dass**
mit den Bohrmitteln der Tunnelvortriebsvorrichtung auf beiden Ulmenstrecken (54, 54r) seitlich gegenüberliegend Schusslöcher (51, 51r) gebohrt werden und im weiteren Verlauf des Vortriebs weiter hinten von der Tunnelbrust (56) entfernte Schusslöcher (51, 51r) gegenüberliegend auf beiden Ulmenstrecken (54, 54r) als Empfängerlöcher (52, 52r) mit Empfängern (Rcv1, Rcv1r, ..., Rcv4, Rcv4r) bestückt werden.

3. Verfahren nach Anspruch 1
**dadurch gekennzeichnet, dass**
mit den Bohrmitteln der Tunnelvortriebsvorrichtung auf der anderen Ulmenstrecke (54r) Empfängerlöcher (52r) im Abstand des konstanten Vielfachen des Abstandes zweier benachbarter Schusslöcher (51) gebohrt werden und im weiteren Verlauf des Vortriebs mit Empfängern (Rcv1r, ..., Rcv4r) bestückt werden.

4. Verfahren nach einem der Ansprüche 1 bis 3,
**dadurch gekennzeichnet, dass**
das konstante Vielfache des Abstandes zweier benachbarter Schusslöcher (51) ganzzahlig ist und einen Wert aus dem Intervall 4, ... , 10 aufweist.

5. Verfahren nach einem der Ansprüche 1 bis 4,
**dadurch gekennzeichnet, dass**
zwei Schusslöcher (51) einen aufeinanderfolgenden äquidistanten Abstand im Bereich 1m bis 2.5m aufweisen.

6. Verfahren nach einem der Ansprüche 1 bis 5,
**dadurch gekennzeichnet, dass**
im weiteren Verlauf des Vortriebs der oder die am weitesten entfernten Empfänger (Rcv1, Rcv1r) im Abstand des genannten konstanten Vielfachen vor den oder vor die am wenigsten weit entfernten Empfänger (Rcv4/Rcv4r) in Richtung Tunnelbrust (56) umplatziert werden.

7. Verfahren nach einem der Ansprüche 1 bis 6,
**dadurch gekennzeichnet, dass**
im weiteren Verlauf des Vortriebs pro Ulmenstrecke (54, 54r) zwei, drei oder vier Empfänger (Rcv1, ..., Rcv3; Rcv1r, ..., Rcv3r) vorgesehen sind.

8. Verfahren nach einem der Ansprüche 1 bis 7,
**dadurch gekennzeichnet, dass**
bei Sprengvortrieb die Schusslöcher (51, 51r) und die Löcher für den Vortrieb im gleichen Arbeitsschritt mit Sprengladungen geladen werden.

9. Verfahren nach Anspruch 8,
**dadurch gekennzeichnet, dass**
zuerst die Sprengladungen (75, 57r) in den Schusslöchern (51, 51r) gezündet werden und anschliessend die Sprengladungen für den Sprengvortrieb.

**10.** Verfahren nach einem der Ansprüche 6 bis 9,
**dadurch gekennzeichnet, dass**
die Anzahl der seismischen Spuren für die Generierung einer weiteren Seismogramm-Sektion im weiteren Verlauf des Vortriebs konstant bleibt.

**FIG 1a**

50
54
60
54r
Rcv2
Rcv2r
52r
52
53
59

B – B

FIG 1b

60
53
50
57
57r
51r
51
54r
59

C – C

FIG 1c

**FIG 2a**

**FIG 2b**

**FIG 2c**

**FIG 3**

**EP 3 330 745 A1**

Europäisches
Patentamt
European
Patent Office
Office européen
des brevets

# EUROPÄISCHER RECHERCHENBERICHT

Nummer der Anmeldung

EP 16 20 1683

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | GIESE R ET AL: "In situ seismic investigations of fault zones in the Leventina Gneiss Complex ofthe Swiss Central Alps", GEOLOGICAL SOCIETY - SPECIAL PUBLICATION, GEOLOGICAL SOCIETY PUBLISHING HOUSE, GB, Bd. 240, 1. Januar 2005 (2005-01-01), Seiten 15-24, XP008114739, ISSN: 0305-8719, DOI: 10.1144/GSL.SP.2005.240.01.02 * das ganze Dokument * ----- | 1-10 | INV. G01V1/00 E21D9/00 ADD. G01V1/104 G01V1/20 G01V1/52 |
| Y | T INAZAKI ET AL: "Stepwise application of horizontal seismic profiling for tunnel prediction ahead of the face", THE LEADING EDGE, Bd. 18, Nr. 12, 1. Dezember 1999 (1999-12-01), Seiten 1429-1431, XP055372017, DOI: 10.1190/1.1438246 * das ganze Dokument * ----- | 1-10 | |
| A | CN 203 287 537 U (NO 3 ENGINEERING CORP LTD OF CR20G) 13. November 2013 (2013-11-13) * das ganze Dokument * ----- | 1-10 | RECHERCHIERTE SACHGEBIETE (IPC) G01V E21D |

Der vorliegende Recherchenbericht wurde für alle Patentansprüche erstellt

| Recherchenort | Abschlußdatum der Recherche | Prüfer |
|---|---|---|
| Den Haag | 12. Mai 2017 | Scappazzoni, E |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
  Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 20 1683

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-05-2017

| Im Recherchenbericht angeführtes Patentdokument | Datum der Veröffentlichung | Mitglied(er) der Patentfamilie | Datum der Veröffentlichung |
|---|---|---|---|
| CN 203287537 U | 13-11-2013 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009077102 A1

- EP 16185227 A

**In der Beschreibung aufgeführte Nicht-Patentliteratur**

- **LORENZO PETRONIO ; FLAVIO POLETTO.** Seismic-while-drilling by using tunnel boring machine noise. *Geophysics,* 2002, vol. 67 (6), 1798-1809
- **BORM, G. ; GIESE, R. ; OTTO, P. ; AMBERG, F. ; DICKMANN, T.** Integrated Seismic Imaging System For Geological Prediction During Tunnel Construction. International Society for Rock Mechanics. *ISRM Congress,* 2003
- **THOMAS BOHLEN ; ULRICH LORANG ; WOLFGANG RABBEL ; CHRISTOF MÜLLER ; RÜDIGER GIESE ; STEFAN LÜTH ; STEFAN JETSCHNY.** Rayleigh-to-shear wave conversion at the tunnel face - From 3D-FD modeling to ahead-of-drill exploration. *Geophysics,* November 2007, vol. 72 (6), T67-T79

- **STEFAN JETSCHNY ; THOMAS BOHLEN ; ANDRE KURZMANN.** Seismic prediction of geological structures ahead of the tunnel using tunnel surface waves. *Geophysical Prospecting,* September 2011, vol. 59 (5), 934-946
- **SATTEL, G. ; SANDER, B. K. ; AMBERG, F. ; KASHIWA, T.** Predicting ahead of the face - Tunnel Seismic prediction. *TUNNELS & TUNNELING,* April 1996, 24-30